# EUROPEAN PATENT APPLICATION

(11) **EP 2 369 833 A1**
(43) Date of publication of application: **28.09.2011**
(21) Application number: 11158302.7
(22) Date of filing: 15.03.2011
(51) Int. Cl.: H04N 1/44, H04N 1/00

(54) **Multi functional peripheral**

(30) Priority: 26.03.2010 JP 2010073873
(71) Applicant: Murata Machinery, Ltd., Kyoto-shi, Kyoto 6018326 (JP)
(72) Inventor: Mizutani, Masashi, Kyoto-shi Kyoto 612-8686 (JP); Kataoka, Naoto, Kyoto-shi Kyoto 612-8686 (JP)
(74) Representative: Stöckeler, Ferdinand

(57) **Abstract**

A multi functional peripheral could change between a logout state in which a predetermined process can not be performed and a login state which the predetermined process can be performed. The multi functional peripheral comprises a display unit provided with a screen arranged to display the state of the multi functional peripheral, an accepting unit arranged to accept an entry of an identification information to be used to log into the multi functional peripheral, an controlling unit for control of actions of the multi functional peripheral arranged to cause the multi functional peripheral to change from the logout state to the login state when the controlling unit authenticates the identification information accepted by the accepting unit, a light-emitting unit, which is arranged separately from the display unit, arranged to start a light-emitting action when the multi functional peripheral changes from the logout state to the login state and terminate the light-emitting action when the multi functional peripheral changes from the logout state to the login state.

## Description

### BACKGROUND OF THE INVENTION

### 1. Field of the Invention

The present invention relates to a multi functional peripheral arranged to authorize a user to use the multi functional peripheral by prompting the user to login.

### 2. Description of the Related Art

In recent years, network multi functional peripherals (hereinafter: MFP) as an image process apparatus including, for example, a printing function, a scanner function, a facsimile communication function and a network communication function, have become popular in terms of saving space.

Some of such MFPs further include a function to prompt a user to login, i.e., a function to cause a MFP to change, by authenticating identification information entered by the user, from a logout state in which a predetermined process such as copying could not be performed to a login state in which the predetermined process could be performed. When such MFPs are in the login state, the MFPs change from the login state to the logout state when a user performs an operation such as pushing a logout key.

Further, some MFPs include a function to make identification information authenticated at the time of the login correspond to process information (for example, the number of copies) which is performed under the authentication and store the identification information and the process information in recording devices of the MFPs as a process history.

Such a MFP with the function to prompt a user to login could be misused by impersonation by other person and the like when the user forgets to logout after the login.

Well-known documents disclose technology to reliably make a MFP in a logout state.

According to the technology described in the documents, the MFP changes to the logout state when a reset key used for formatting various settings is pushed down.

As described above, using the reset key, which has less possibility to be forgot to be used as a trigger for the logout than a logout key, reduces the possibility to leave the MFP in a login state unnecessarily.

However, according to the above described conventional technology, when a user logs in to cause a MFP to perform a process such as copying and changes a setting to perform another process, it is necessary to distinguish between the logout and the reset.

Further, when an unusual operation such as pushing a reset key twice in a row is detected, a MFP may be changed to the logout state. This case makes the user perform extra operations and seems unfavorable in view of user friendliness.

Furthermore, there may be a function to logout automatically when no operation has been performed on a MFP for predetermined time. However, in this case, if the time is short, the MFP may logout against the user's will, and further, if the time is long, the possibility of the misuse of the MFP by other person may be increased.

Apparatus such as MFP generally includes a start key for providing an instruction to start a process such as copying to the apparatus. In such apparatus, when the start key is pushed down by a user, the operation by the user for the process is completed at this point. Accordingly, pushing the start key may trigger the automatic logout.

However, in this case, when several processes are performed continually by the apparatus, the apparatus would logout at each process and inconvenience the user.

Further, a display unit such as a liquid crystal display of the MFP or the like may display letters or image representing the login state to help a user to be aware of the login state.

However, since such a display unit displays various information on the MFP such as the number of sheets to be printed and a setting for paper, it is not realistic to display letters or image representing the login state all the time.

Further, even when letters or image representing the login state are always displayed on the display unit during the login state, other information is also displayed on the display as described above, thereby making those letters or image not so effective enough to help a user to be aware of the login state.

### SUMMARY OF THE INVENTION

In view of the above problems, it is an object of the present invention to provide a MFP, which could increase the certainty of the logout after the login.

In order to overcome the problems described above, a MFP according to a preferred embodiment of the present invention, which changes between the logout state in which a predetermined process can not be performed and the login state in which the predetermined process can be performed, includes a display unit provided with a screen which represents the state of the MFP, a scanner, and a printer, an accepting unit arranged to accept an entry of identification information, which is used to cause the MFP to change to the login state, a controlling unit for control of actions of the MFP arranged to cause the MFP to change from the logout state to the login state when the controlling unit authenticates the identification information accepted by the accepting unit, and a light-emitting unit, which is arranged separately from the display unit, arranged to start a light-emitting action when the MFP changes from the logout state to the login state, and terminate the light-emitting action when the MFP changes from the login state to the logout state.

Such a configuration makes it possible to prompt a user effectively to perform an operation to logout (hereinafter: logout operation) by the light-emitting action of the light-emitting unit when the MFP changes to the login state. In other words, forgetting to logout is reduced to consequentially increase the certainty of the logout.

Further, since the light-emitting unit is arranged separately from the display unit, which displays the state of the MFP, it becomes possible to lead the user to perform the logout operation without consuming the display area of the screen.

The MFP according to a preferred embodiment of the present invention further includes a detecting unit arranged to detect an operation for the light-emitting unit by a user, and the controlling unit may cause the MFP to change from the login state to the logout state when the detecting unit detects the operation for the light-emitting unit by the user after the MFP changes to the login state.

This configuration enables the light-emitting unit itself to function as a logout key for the logout operation. Accordingly, it becomes possible to lead a user more effectively to perform the logout operation and to make the configuration of the MFP more efficient.

The MFP according to a preferred embodiment of the present invention further includes a storing unit arranged to store the light-emitting action in which each one of identification information including the identification information corresponds to information representing any one of the light-emitting actions differing from each other, and the light-emitting unit may perform the light-emitting action corresponding to the authenticated identification information represented in the light-emitting action information.

According to the configuration, for example, it becomes possible to identify which user is using the MFP, i.e., which user logs into the MFP, according to which light-emitting action is being performed by the light emitting unit, when the MFP is in the login state. As a result, the MFP, which is changed to the login state with the identification information corresponding to a certain user, would not be misused by other person.

Further, according to the MFP of a preferred embodiment of the present invention, the light-emitting action information makes each one of the identification information correspond to information representing any one of colors differing from each other, and the light-emitting unit may emit light of the color corresponding to the authenticated identification information represented in the light-emitting action information.

This configuration makes it possible to easily identify, for example, which user logs into the MFP, by the color of the emitted light of the light-emitting unit.

Further, according to the MFP of a preferred embodiment of the present invention, the light-emitting action information makes each one of the identification information correspond to information representing any one of blinking patterns differing from each other, and the light-emitting unit may repeat lighting and extinction according to the blinking pattern corresponding to the authenticated identification information represented in the light-emitting action information.

This configuration makes it possible to easily identify, for example, who logs into the MFP by the blinking pattern of the light emitting unit.

According to the MFP of a preferred embodiment of the present invention, the accepting unit may further accept a starting instruction for starting the predetermined process after the MFP changes from the logout state to the login state, and the light-emitting unit may change the ongoing light-emitting action when the accepting unit accepts the starting instruction.

This configuration makes it possible to lead a user effectively to perform the logout operation by changing the ongoing light-emitting action, when the process such as copying is started by the starting instruction and the user could perform the logout operation at any time.

Further, according to the MFP of a preferred embodiment of the present invention, the light-emitting unit may change the ongoing light-emitting action from lighting to blinking when the accepting unit accepts the starting instruction.

This configuration makes it possible to help a user to be aware of the login state with the lighting of the light-emitting unit and lead the user to perform the logout operation by the blinking of the light-emitting unit, which is a mode easily recognized by the user.

Further, according to the MFP of a preferred embodiment of the present invention, the light-emitting unit may change the light-emitting action by changing the color of the emitted light when the accepting unit accepts the starting instruction.

This configuration makes it possible to lead a user to perform the logout operation by changing the light-emitting color of the light-emitting unit, which is a mode easily recognized by the user.

Further, according to the MFP of a preferred embodiment of the present invention, the light-emitting unit may change the changed light-emitting action back to the pre-changed light-emitting action when an operation on elements other than the light-emitting unit by a user is detected after the accepting unit accepts the starting instruction.

For example, it is assumed that a user causes the MFP to perform several processes continuously. In this case, according to the above described configuration, the light-emitting action of the light-emitting unit is changed when the first process is started, thereby informing that the logout operation could be performed at any time.

However, when the user performs an operation on the MFP (such as changing a setting) for the next process, the light-emitting action of the light-emitting unit is changed back to the pre-changed light-emitting action. That is, the user is helped to recognize that the logout operation could not be performed at this point. As a result, when the user continuously performs several processes, for example, performing the logout operation by mistake by the user during the time from the start of a certain process to the start of the next process is prevented.

The MFP according to a preferred embodiment of the present invention further includes an operation panel provided with a plurality of operation keys including a start key used for providing the starting instruction to the MFP to start the predetermined process, and the light-emitting unit may be arranged closer to the start key than any other operation keys except the start key on the operation panel.

According to the configuration, the light-emitting unit is arranged close to the start key, which a user never fails to push for causing the MFP to perform a process such as copying. The user could recognize the lighting of the light-emitting unit easily, so that the certainty of the logout operation by the user is more increased.

As is obvious from the above description, the present invention could provide the MFP, which could increase the certainty of the logout after the login.

Other features, elements, processes, steps, characteristics and advantages of the present invention will become more apparent from the following detailed description of preferred embodiments of the present invention with reference to the attached drawings.

### BRIEF DESCRIPTION OF THE DRAWINGS

Fig. 1 is an external view of the MFP according to a preferred embodiment of the present invention

Fig. 2 illustrates a hardware configuration of the MFP according to a preferred embodiment of the present invention

Fig. 3 is a block diagram illustrating a basic functional configuration of the MFP according to a preferred embodiment of the present invention.

Fig. 4 is a schematic view illustrating a configuration of the operation panel of the MFP according to a preferred embodiment of the present invention.

Fig. 5 is a flow chart illustrating a procedure of basic actions of the MFP according to a preferred embodiment of the present invention.

Fig. 6 is a flow chart illustrating an example of a detailed procedure of actions of the MFP according to a preferred embodiment of the present invention.

Fig. 7 is a first schematic diagram illustrating an example of actions of the light-emitting unit of the MFP according to a preferred embodiment of the present invention.

Fig. 8 is a second schematic diagram illustrating an example of actions of the light-emitting unit of the MFP according to a preferred embodiment of the present invention.

Fig. 9 is a block diagram illustrating an extended example of the functional configuration of the MFP according to a preferred embodiment of the present invention.

Fig. 10A is a schematic diagram illustrating an example of a first configuration of data of light-emitting action information of the MFP according to a preferred embodiment of the present invention.

Fig. 10B is a schematic diagram illustrating an example of a second configuration of data of the light-emitting action information of the MFP according to a preferred embodiment of the present invention.

Fig. 11 is a partial view of the operation panel, which separately arranges the light-emitting unit and a logout key of the MFP according to a preferred embodiment of the present invention.

### DETAILED DESCRIPTION OF PREFERRED EMBODIMENTS

Preferred embodiments of the present invention will be described with reference to the drawings.

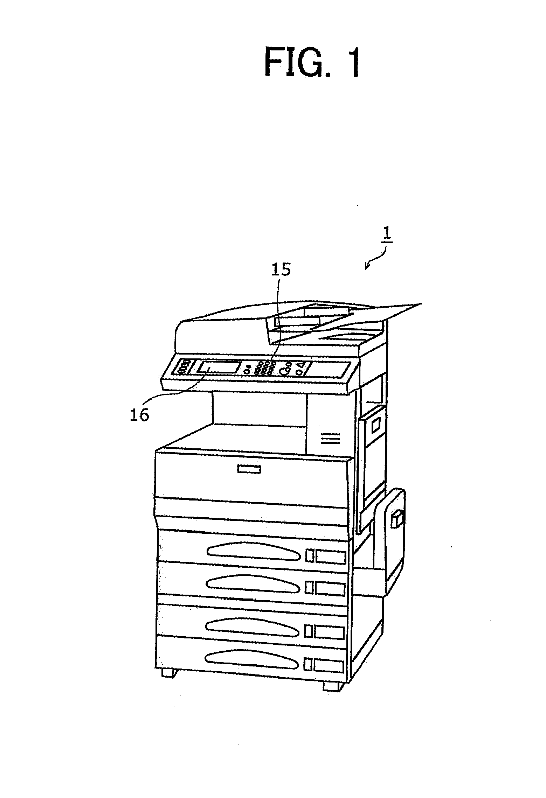

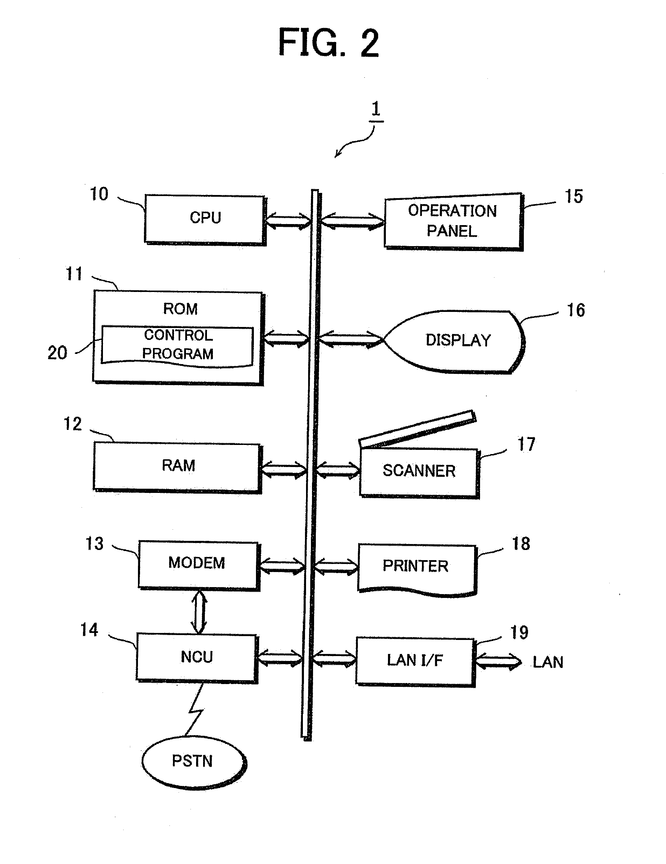

Fig. 1 is an external view of an MFP according to a preferred embodiment of the present invention. In addition, Fig. 2 illustrates a hardware configuration of the MFP according to a preferred embodiment of the present invention.

A MFP 1 according to a preferred embodiment of the present invention includes a central processing unit (CPU) 10, a read only memory (ROM) 11, a random access memory (RAM) 12, a modem 13, a network control unit (NCU) 14, an operation panel 15, a display 16, a scanner 17, a printer 18 and a local area network interface (LAN I/F) 19 as a hardware configuration.

The CPU 10 is a processor arranged to perform a control program 20 stored in the ROM 11.

The ROM 11 is a read only memory arranged to hold the control program 20 and the like.

The RAM 12 is a read-write memory arranged to be used as a work area when the CPU 10 performs the control program 20. Further, the RAM 12 temporarily holds image data read by the scanner 17 and the like.

The modem 13 is a facsimile modem arranged to modulate image data to be sent out through a facsimile transmission or to demodulate image data sent from the outside through the facsimile transmission.

The NCU 14 is a line terminating equipment connected to the public switched telephone network (PSTN).

The operation panel 15 is a panel arranged to accept an entry by a user. For example, the panel 15 accepts the identification information to login, an instruction to start copying and the like.

The display 16 is a liquid crystal display LCD or the like. According to the embodiment, a touch panel, which allows a user to operate the MFP 1 by touching an image and the like displayed thereon, is adopted as the display 16. To that end, the display 16 could therefore accept an entry of an instruction which the user enters by touching while displaying the state of the MFP 1.

The scanner 17 is a device arranged to generate document data by reading a document optically with a charge coupled device image sensor (CCD).

The printer 18 is a printing device arranged to print out, for example, image data generated by the scanner 17 and the like. Further, the printer 18 prints out image data sent from another facsimile device and the like through the PSTN, the NCU 14 and the modem 13.

The LAN I/F 19 is a communication adapter arranged to connect the MFP 1 with a LAN.

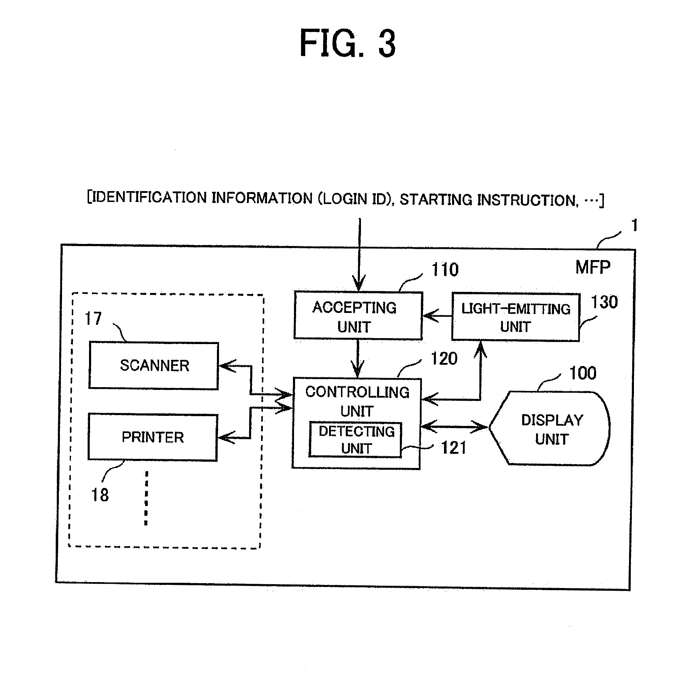

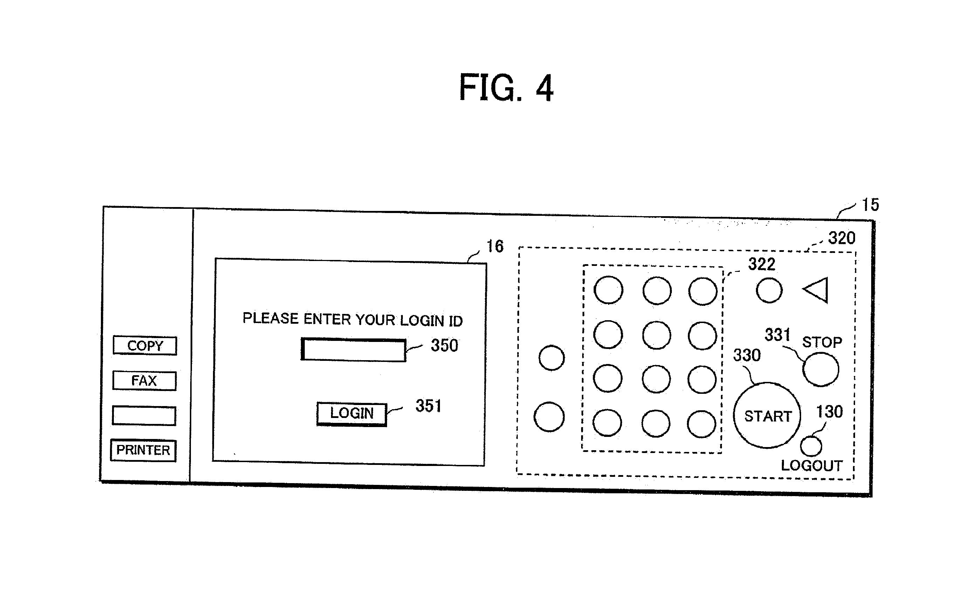

A functional configuration of the MFP 1 configured as above will be described with reference to Figs. 3 and 4.

Fig. 3 is a block diagram illustrating a basic functional configuration of the MFP 1 according to a preferred embodiment of the present invention

The MFP 1 includes a display unit 100, an accepting unit 110, a controlling unit 120, a detecting unit 121 and a light-emitting unit 130.

The display unit 100 is a process unit provided with a screen, which represents the state of the MFP 1 such as a parameter set for the MFP 1, information of an ongoing process of the MFP 1 and the like. The process is realized, for example, by the display 16 controlled by the CPU 10.

The accepting unit 110 is a process unit arranged to accept the identification information to be used to log into the MFP 1 and a starting instruction to cause the MFP 1 to start a predetermined process. The process is realized, for example, with the operation panel 15 controlled by the CPU 10.

The controlling unit 120 is a process unit for control of actions of the MFP 1, and for example, the control is achieved by the CPU 10 performing the control program 20. More specifically, the controlling unit 120 controls actions of the scanner 17, the printer 18 and the like of the MFP 1.

Further, when the controlling unit 120 authenticates the identification information accepted by the accepting unit 110, the controlling unit 120 causes the MFP 1 to change from the login state to the logout state. Then, after the logout operation is performed on the MFP 1, the controlling unit 120 causes the MFP to change from the login state to the logout state.

The detecting unit 121 is a process unit arranged to detect an operation for the light-emitting unit 30 and elements of the MFP 1 other than the light-emitting unit 30 (for example, a key on the operation panel 15, the scanner 17 and the printer 18).

The light-emitting unit 130 is a light-emitting device, which includes light-emitting elements such as light-emitting diode (LED) and performs predetermined light-emitting actions. Further, according to the embodiment, the light-emitting unit 130 also functions as a logout key to cause the MFP 1 to logout.

More specifically, the light-emitting unit 130 starts the light-emitting action when the MFP 1 changes from the logout state to the login state, and terminates the light-emitting action when the MFP 1 changes from the login state to the logout state.

Further, when the MFP 1 is in the login state and the light-emitting 130 is pushed down, the detecting unit 121 detects that the light-emitting unit 130 is pushed down. The controlling unit 120 causes the MFP 1 to change from the login state to the logout state when the detecting unit 121 detects that the light-emitting unit 130 is pushed down.

As described above, the light-emitting unit 130, according to the embodiment, includes a function to prompt a user to perform the logout operation by emitting light and a function as the logout key to accept the logout operation by the user.

Fig. 4 is a schematic view illustrating a configuration of the operation panel 15 according to a preferred embodiment of the present invention.

As illustrated in Fig. 4, the operation panel 15 is provided with an entry unit 320 including a numeric key group 322. Further, according to a preferred embodiment of the present invention, the display 16 is mounted into the operation panel 15.

According to the embodiment, as illustrated in Fig. 4, the display 16 displays a login ID entry field 350 where a login ID, which is the identification information used to log into the MFP 1, is to be entered.

For example, a user enters a login ID, which is assigned to the user, into the login ID enter field 350 by using the numeric key group 322. Then, the user touches a login button 351 displayed on the display 16. Accordingly, the user logs into the MFP 1. In other words, the MFP 1 changes from the logout state to the login state when the login ID is authenticated.

Further, the numeric key group 322, a start key 330, a stop key 331, and other operation keys are arranged on the operation panel 15, and the light-emitting unit 130 is arranged close to the start key 330.

More specifically, the light-emitting unit 130 is arranged closer to the start key 330 than any other operation keys except the start key 330 on the operation panel 15.

The start key 330 is a key for providing the starting instruction of a process such as copying to the MFP 1, and is the key, which a user never fails to use. The light-emitting unit 130, which is arranged close to the start key 330, could prompt a user effectively to perform the logout operation.

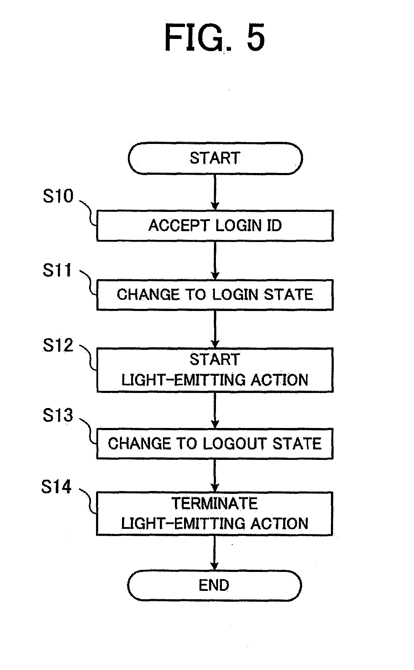

Next, with reference to Figs. 5 through 8, actions of the MFP 1 according to a preferred embodiment of the present invention will be described.

Fig. 5 is a flow chart illustrating a procedure of basic actions of the MFP 1 according to a preferred embodiment of the present invention.

With reference to Fig. 5, the procedure of basic actions of the MFP 1 according to a preferred embodiment of the present invention will be described.

The accepting unit 110 accepts an entry of a login ID (S10). More specifically, the accepting unit 110 accepts the login ID, which is entered into the login ID enter field 350.

The accepting unit 110 provides the login ID to the controlling unit 120. The controlling unit 120 causes the MFP 1 to change from the logout state to the login state when the controlling unit 120 authenticates the login ID (S11).

The light-emitting unit 130 starts the light-emitting action when the MFP 1 changes from the logout state to the login state (S12).

When the detecting unit 121 detects the logout operation onto the light-emitting unit 130, the controlling unit 120 causes the MFP 1 to change from the login state to the logout state (S13).

The light-emitting unit 130 terminates the light-emitting action when the MFP 1 changes from the login state to the logout state (S14).

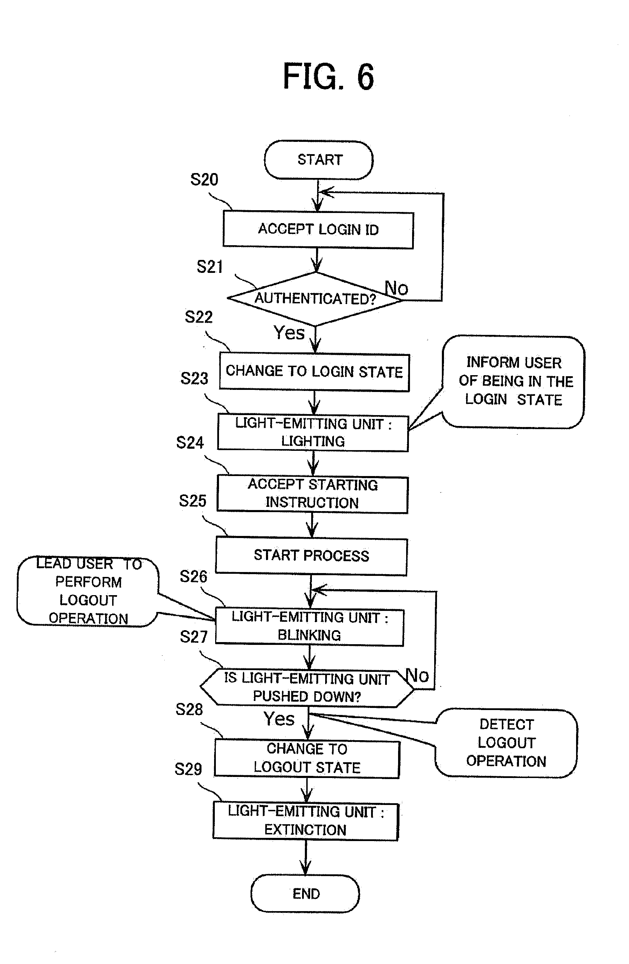

With reference to Figs. 6 through 8, an example of detailed actions of the MFP 1, which performs such basic actions, will be described.

Fig. 6 is a flow chart illustrating an example of a procedure of detailed actions of the MFP 1 according to a preferred embodiment of the present invention.

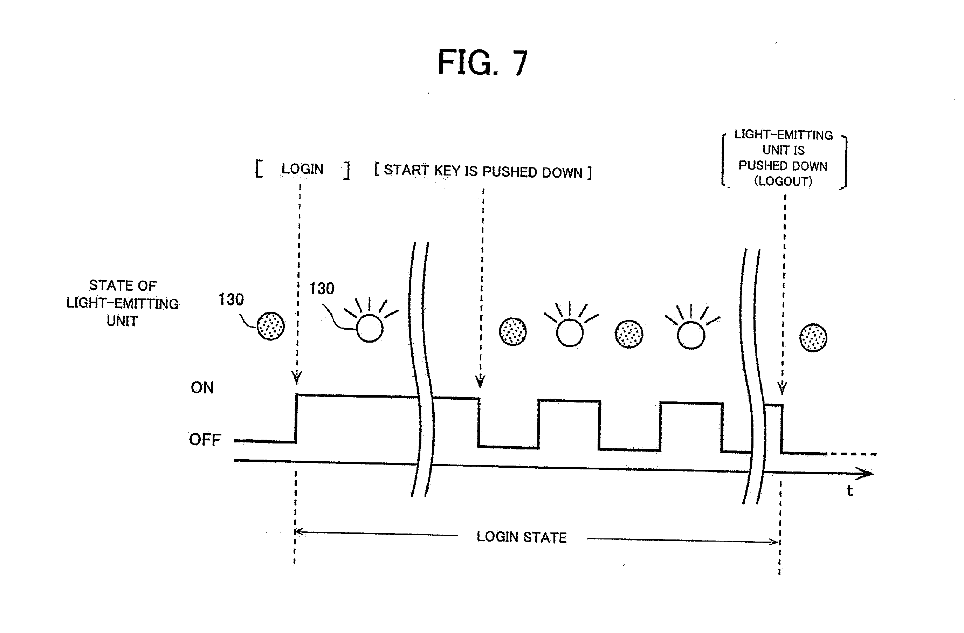

Fig. 7 is a diagram illustrating an example of actions of the light-emitting unit 130 according to a preferred embodiment of the present invention.

The accepting unit 110 firstly accepts a login ID (S20), and the controlling unit 120 confirms the legitimacy of the accepted login ID(S21). When the login ID is authenticated by the confirmation (yes in S21), the controlling unit 120 causes the MFP 1 to change from the logout state to the login state as described above (S22).

Consequently, the MFP 1 becomes able to perform a predetermined process such as copying. Further, what kind of process could be performed may depend on, for example, each login ID.

The light-emitting unit 130 starts lighting, which is triggered by, for example, the change of MFP 1 to the login state (S23). Consequently, the user is informed that the MFP 1 is in the login state.

The user subsequently, for example, sets a document on the scanner 17 to push down the start key 330, thereby making the accepting unit 100 accept the starting instruction for starting copying (S24).

When the accepting unit 110 accepts the starting instruction, the MFP 1 starts the process represented by the starting instruction, i.e., a process for copying the document (S25).

Further, the light-emitting unit 130 changes the ongoing light-emitting action from lighting to blinking, which is triggered by, for example, the acceptance of the starting instruction at the accepting unit 110(S26).

In other words, the operation by the user for the process for copying the document is completed when the start key 330 is pushed down so that the MFP 1 could logout at anytime.

As a result, the light-emitting unit 130 could lead the user effectively to perform the logout operation by changing the ongoing light-emitting action from lighting to blinking.

Subsequently, when the light-emitting unit 130, which also functions as the logout key, is pushed down(yes in S27), the detecting unit 121 detects the operation as the logout operation.

When the detecting unit 121 detects the logout operation, the controlling unit 120 causes the MFP 1 to change from the login state to the logout state (S28). As a result, any process such as copying, which could be performed when the MFP 1 changes to the login state (S22), could not be performed.

The light-emitting unit 130 terminates lighting, which is triggered by, for example, the change of the MFP 1 to the logout state. In other words, the light-emitting unit 130 turns the light off (S29).

Further, the light-emitting unit 130 starts, terminates or changes an action, for example, according to a controlling signal from the controlling unit 120.

The above actions of the light-emitting unit 130 in the procedure of the actions of the MFP 1 illustrated in Fig. 6 is outlined as illustrated in Fig. 7.

Fig. 7 is a first schematic diagram illustrating an example of actions of the light-emitting unit 130 according to a preferred embodiment of the present invention.

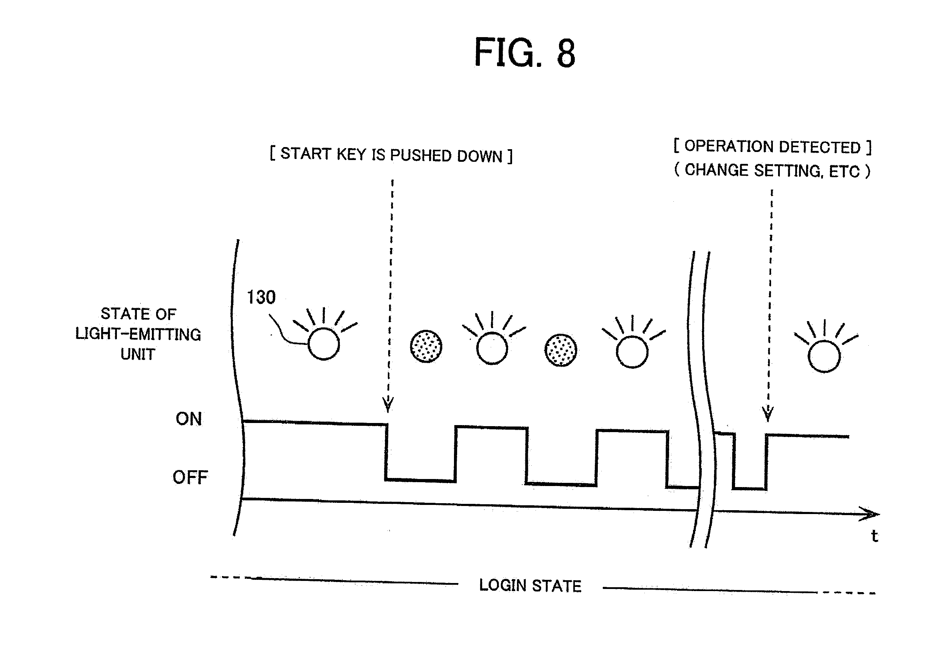

Further, "ON" illustrated in Figs. 7 and 8 (to be described later) represents lighting of the light-emitting unit 130, and "OFF" represents extinction of the light-emitting unit 130.

As illustrated in Fig. 7, the MFP 1 changes to the login state, thereby making the light-emitting unit 130 start lighting, i.e., start continuous light-emitting. Subsequently, the start key 330 is pushed down, thereby making the light-emitting unit 130 change the ongoing light-emitting action from lighting to blinking, which repeats lighting and extinction. After that, the light-emitting unit 130 is pushed down, thereby making the light-emitting unit 130 turn the light off.

As described above, the start key 330 is pushed down, i.e., the accepting unit 110 accepts the starting instruction for any process, thereby making the light-emitting unit 130 change the ongoing light-emitting action.

Further, after the start key 330 is pushed down for starting copying a document by the user, for example, the MFP 1 could be required to copy another document.

In this case, the light-emitting action of the light-emitting unit 130, which is changed from lighting to blinking, changes back to the pre-changed lighting.

Fig. 8 is a second schematic diagram illustrating an example of actions of the light-emitting unit 130 according to a preferred embodiment of the present invention.

As illustrated in Fig. 8, when the detecting unit 121 detects an operation, which is performed on elements other than the light-emitting unit 130, after the light-emitting unit 130 changes the light-emitting action from lighting to blinking, the light-emitting unit 130 changes back the light-emitting action from blinking to lighting.

Further, the operation performed on elements other than the light-emitting unit 130 may be, for example, setting a document on the scanner 17, changing a setting for the MFP 1 by using the operation panel 15 or the like.

Consequently, by the blinking of the light-emitting unit 130, the user could recognize clearly that the logout operation could be performed at that point. However, when the user does not perform the logout operation but another operation for a new process, the detecting unit 121 detects the operation for the new process.

When the detecting unit 121 detects the operation for the new process, the light-emitting unit 130 changes back the light-emitting action from blinking to lighting. Further, when the start key 330 is pushed down to start the new process after the light-emitting unit 130 changes from blinking to lighting, the light-emitting unit 130 changes back the light-emitting action from lighting to blinking.

Since the light-emitting unit 130 according to the embodiment changes the light-emitting action as described above, it becomes possible to lead a user more certainly to perform the logout operation. For example, when a user performs several processes continuously, performing the logout operation by mistake by the user during the time from the start of a process to the start of the next process is prevented.

In Figs. 6 through 8, a case in which the light-emitting unit 130 changes the light-emitting action between lighting and blinking has been described.

However, the light-emitting unit 130 may change the light-emitting action by changing color, brightness and a blinking cycle.

For example, the light-emitting unit 130 may emit green light when the MFP 1 changes from the logout state to the login state, and may change the emission color from green to red by pushing down the starting key 330.

Further, the light-emitting unit 130 may emit light at predetermined intensity when the MFP 1 changes from the logout state to the login state, and then may be changed to emit light at higher intensity than the predetermined intensity by pushing down the start key 330. In other words, the light-emitting unit 130 lighted by the login may be made to emit brighter light by pushing down the start key 330.

Further, for example, the light-emitting unit 130 may blink at a predetermined cycle when the MFP 1 changes from the logout state to the login state, and then may be made to blink at a shorter cycle or a longer cycle than the predetermined cycle by pushing down the start key 330.

In any of the above cases, it becomes possible to help a user to recognize clearly that the MFP 1 is in the login state as well as in the state in which logout operation could be performed.

Further, the light-emitting unit 130 could change the light-emitting action on user basis to inform that the MFP 1 is in the login state.

In this case, the MFP 1 stores, for example, the light-emitting action information, which makes the login ID correspond to the light-emitting action. Further, the light-emitting unit 130 performs the light-emitting action corresponding to the login ID, which was used to login, according to the light-emitting action information.

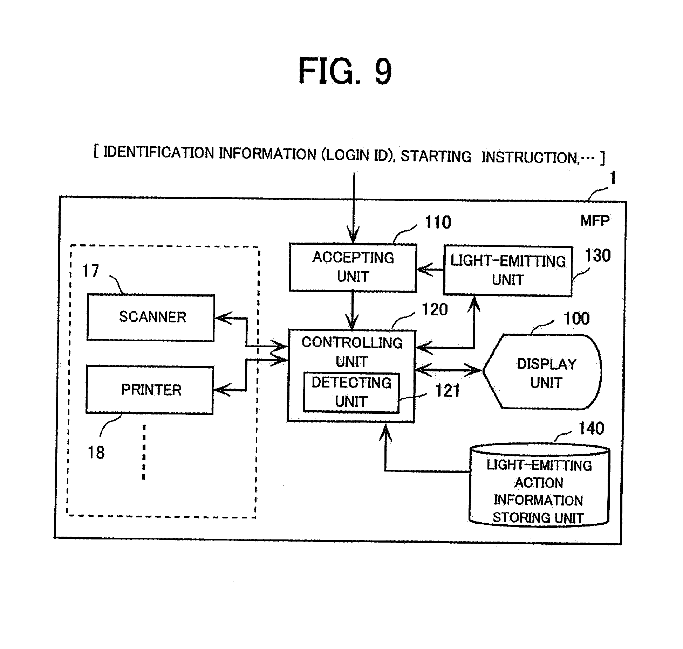

Fig. 9 is a block diagram illustrating an example of an extended functional configuration of the MFP 1 according to a preferred embodiment of the present invention.

The MFP 1 illustrated in Fig. 9 includes not only function blocks of the MFP 1 illustrated in Fig. 3 but also a light-emitting action information storing unit 140.

According to the MFP 1 illustrated in Fig. 9, when the controlling unit 120 authenticates the login ID, the controlling unit 120 identifies information representing the light-emitting action corresponding to the login ID by referring to the light-emitting action information stored in the light-emitting action information storing unit 140.

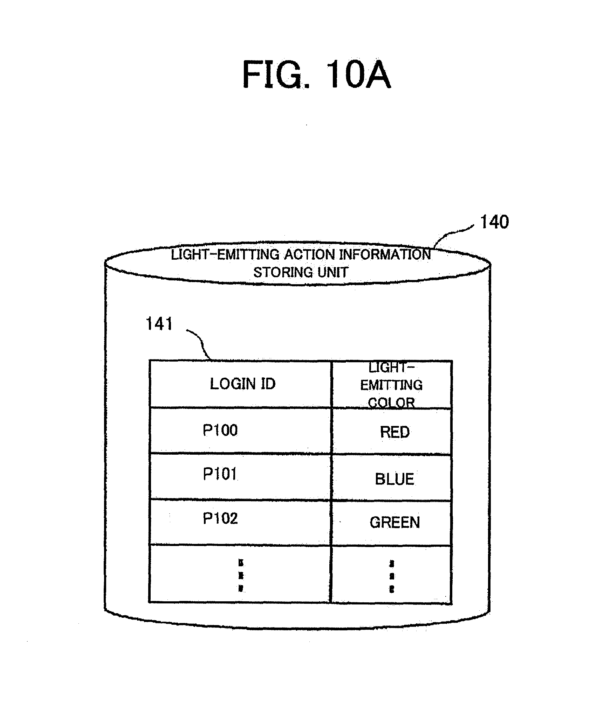

Fig. 10A is a schematic diagram illustrating an example of a first configuration of data of the light-emitting action information according to a preferred embodiment of the present invention.

For example, when the controlling unit 120 authenticates the login ID "P100", the controlling unit 120 identifies the light-emitting color "red" corresponding to "P100" by referring to the light-emitting action information 141 illustrated in Fig. 10A.

The controlling unit 120 notifies the light-emitting unit 130 of information representing the light-emitting color "red". The light-emitting unit 130 receives the information representing the light-emitting color "red" from the controlling unit 120 and emits red light.

In other words, the light-emitting unit 130 could inform with the red light that the MFP 1 changes to the login state with the authentication of "P100".

Subsequently, when the start key 330 is pushed down, for example, the user is informed with the blinking of the red light that the logout operation could be performed. Further, the light-emitting color may be changed to, for example, a color which is not registered in the light-emitting action information when the start key 330 is pushed down.

Further, instead of changing the light-emitting color for each login ID as described above, the blinking pattern may be changed for each login ID.

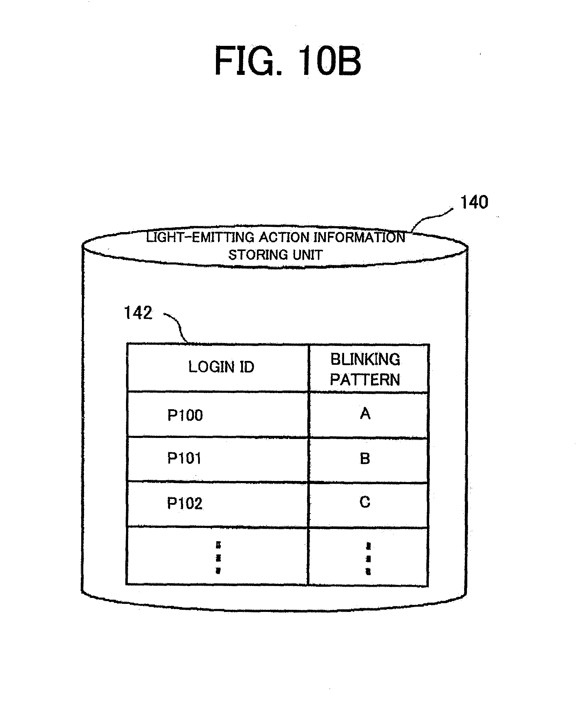

Fig. 10B is a schematic diagram illustrating an example of a second configuration of data of the light-emitting action information according to a preferred embodiment of the present invention.

For example, when the controlling unit 120 authenticates the login ID "P100", the controlling unit 120 identifies the blinking pattern "A" corresponding to "P100" by referring to the light-emitting action information 142 illustrated in Fig. 10B.

The controlling unit 120 notifies the light emitting unit 130 of information representing the blinking pattern "A". The light-emitting unit 130 receives the information representing the blinking pattern "A" from the controlling unit 120 and repeats lighting and extinction according to the pattern corresponding to "A".

Further, the light-emitting unit 130 has specific information corresponding to each one of the blinking patterns. For example, the light-emitting unit 130 has information, as the information corresponding to "A", representing that lighting for 1 second and extinction for 0.5 second are repeated.

Further, the controlling unit 120 may notify the light-emitting unit 130 of the specific information representing a blinking cycle and the like instead of the information representing the blinking pattern. Furthermore, the specific information such as the information representing the blinking cycle and the like may be registered as the light-emitting action information for each login ID.

As described above, the light-emitting unit 130 could inform with the blinking pattern corresponding to "P100" that the MFP 1 changes to the login state with the authentication of "P100".

Subsequently, when the start key 330 is pushed down, for example, the light-emitting unit 130 changes to a blinking pattern, which is not registered in the light-emitting action information. Further, the light-emitting unit 130, for example, may not change the blinking pattern but the light-emitting color when the start key 330 is pushed down.

As described above, the MFP 1 according to the embodiment includes the light-emitting unit 130, which is arranged separately from the display unit 100. The light-emitting unit 130 starts the light-emitting action when the MFP 1 changes from the logout state to the login state and terminates the light-emitting action when the MFP 1 changes from the login state to the logout state.

Consequently, the MFP 1 could prompt a user to logout by the action of the light-emitting which is easy to visually recognize. Therefore, it becomes possible to prompt a user effectively to perform the logout operation.

Further, the light-emitting unit 130 is arranged separately from the display unit 100 arranged to display the state of the MFP 1. More specifically, the light-emitting unit 130 is arranged on the operation panel 15 as a separate body from the display 16, which functions as the display unit 100. Accordingly, it becomes possible to increase the certainty of the logout while the display area of the display 16 is not consumed for leading a user to perform the logout operation.

While the MFP according to a preferred embodiment of the present invention has been described with respect to preferred embodiments thereof, the technical scope of the present invention is not limited to the above described preferred embodiments. The scope of the present invention includes an embodiment modified in such various manners as would be conceived by the person skilled in the art, or an embodiment achieved by combining the elements as described above, as long as the embodiment does not depart from the gist of the present invention.

For example, according to the embodiment, it has been described that the light-emitting unit 130 also functions as the logout key to cause the MFP 1 to logout.

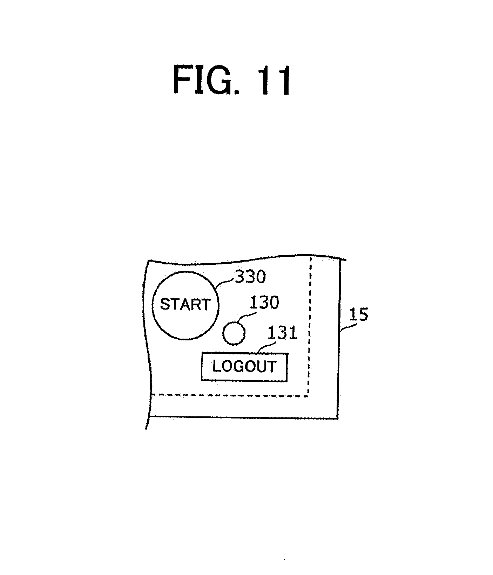

However, as illustrated in Fig. 11, the light-emitting unit 130 and the logout key 131 could be arranged separately.

In this case, for example, as illustrated in Fig. 11, it becomes possible to prompt a user effectively to perform the logout operation by arranging the light-emitting unit 130 close to the logout key 131.

Further, according to the embodiment, it has been described, as an example in which the light-emitting unit 130 starts the light-emitting action when the MFP 1 changes to the login state, that the light-emitting unit 130 starts lighting or blinking, which is triggered by the change of the MFP 1 to the login state.

However, the light-emitting unit 130 may start the light-emitting action at different timing. The light-emitting unit 130 may start the light-emitting action, which is triggered by, for example, the authentication of the login ID at the controlling unit 120. Further, the light-emitting unit 130 may start the light-emitting action, which is triggered by, for example, an operation for settings by using the numeric key group 322 after the MFP 1 changes to the login state.

Furthermore, the light-emitting unit 130 may start the light-emitting action, which is triggered by, for example, pushing down the start key 330 after the MFP 1 changes to the login state.

Any of the above cases substantially falls under the action in which the light-emitting unit 130 starts the light-emitting action when the MFP 1 changes to the login state. Consequently, in any of the above cases, it becomes possible to prompt a user effectively to perform the logout operation.

Further, the MFP 1 may prompt a user to perform the logout operation, for example, by sound, in addition to the light-emitting action of the light-emitting unit 130.

The MFP 1 could prompt a user to perform the logout operation by, for example, a voice message such as "you could logout now" or the like, when the start key 330 is pushed down after the MFP 1 changes to the login state.

According to the embodiment, it has been described that the MFP 1 changes to the login state when a login ID is authenticated. However, the MFP 1 may change to the login state, for example, when both the login ID and a password are authenticated.

The present invention could provide a MFP, which could increase the certainty of the logout after the login. Therefore, the present invention is useful especially in MFPs and the like, which include a scanner, a printer and the like.

While the present invention has been described with respect to preferred embodiments thereof, it will be apparent to those skilled in the art that the disclosed invention may be modified in numerous ways and may assume many embodiments other than those specifically set out and described above. Accordingly, the appended claims are intended to cover all modifications of the present invention that fall within the true spirit and scope of the present invention.

## Claims

1. A multi functional peripheral arranged to change between a logout state in which a predetermined process can not be performed and a login state in which the predetermined process can be performed, comprising:
a scanner;
a printer;
a display unit provided with a screen which is arranged to represent the state of the multi functional peripheral;
an accepting unit arranged to accept an entry of identification information, which is used to cause the multi functional peripheral to change to the login state;
a controlling unit for control of actions of the multi functional peripheral arranged to cause the multi functional peripheral to change from the logout state to the login state when the controlling unit authenticates the identification information accepted by the accepting unit; and
a light-emitting unit, which is arranged separately from the display unit, arranged to start a light-emitting action when the multi functional peripheral changes from the logout state to the login state and terminate the light-emitting action when the multi functional peripheral changes from the login state to the logout state.

2. The multi functional peripheral according to claim 1, further including;
a detecting unit arranged to detect an operation for the light-emitting unit by a user;
wherein the controlling unit is arranged to cause the multi functional peripheral to change from the login state to the logout state when the detecting unit detects the operation for the light-emitting unit by the user after the controlling unit causes the multi functional peripheral to change to the login state.

3. The multi functional peripheral according to claim 1 or 2, further including;
a storing unit arranged to store light-emitting action information in which each one of identification information including the identification information corresponds to information, which represents any one of the light-emitting actions, differing from each other;
wherein the light-emitting unit is arranged to perform the light-emitting action corresponding to the authenticated identification information represented in the light-emitting action information.

4. The multi functional peripheral according to claim 3, wherein the light-emitting action information makes each one of the identification information correspond to information, which represents any one of colors, differing from each other, and
the light-emitting unit is arranged to emit light of the color corresponding to the authenticated identification information represented in the light-emitting action information.

5. The multi functional peripheral according to claim 3, wherein the light-emitting action information makes each one of the identification information correspond to information, which represents any one of blinking patterns, differing from each other, and
the light-emitting unit is arranged to repeat lighting and extinction according to the blinking pattern corresponding to the authenticated identification information represented in the light-emitting action information.

6. The multi functional peripheral according to claim 1 or 2, wherein the accepting unit is arranged to further accept a starting instruction for starting the predetermined process after the multi functional peripheral changes from the logout state to the login state,
the light-emitting unit is arranged to change the ongoing light-emitting action when the accepting unit accepts the starting instruction.

7. The multi functional peripheral according to claim 6, wherein the light-emitting unit is arranged to change the ongoing light-emitting action from lighting to blinking when the accepting unit accepts the starting instruction.

8. The multi functional peripheral according to claim 6, wherein the light-emitting unit is arranged to change the light-emitting action by changing the color of the emitted light after the accepting unit accepts the starting instruction.

9. The multi functional peripheral according to any one of claims 6 through 8, wherein the light-emitting unit is arranged to change back the changed light-emitting action to the pre-changed light-emitting action when an operation on elements other than the light-emitting unit by the user is detected when the accepting unit accepts the starting instruction.

10. The multi functional peripheral according to any one of claims 1 through 9 further including:
an operation panel provided with operation keys including a start key for providing the starting instruction to the multi functional peripheral to start the predetermined process;
wherein the light-emitting unit is arranged closer to the start key than any other operation keys except the start key on the operation panel.
